# EUROPÄISCHE PATENTANMELDUNG

(11) **EP 3 944 983 A1**
(43) Veröffentlichungstag der Anmeldung: **02.02.2022**
(21) Anmeldenummer: 21187662.8
(22) Anmeldetag: 26.07.2021
(51) Int. Cl.: B60L 53/51, B60L 53/57, B60L 53/50, B60L 53/30, B60S 5/02, F25J 1/00

(54) **GASTANKSTATION**

(30) Priorität: 28.07.2020 DE 102020119876
(71) Anmelder: EnBW Energie Baden-Württemberg AG, 76131 Karlsruhe (DE)
(72) Erfinder: Maier, Volker, 89520 Heidenheim (DE); Gruber, Guido, 73479 Ellwangen (DE); Michel, Annika, 73485 Unterschneidheim (DE)
(74) Vertreter: Durm Patentanwälte PartG mbB

(57) **Zusammenfassung**

Die vorliegende Erfindung betrifft eine Versorgungsstation (18) zum Aufladen eines Energiespeichers (12) eines Fahrzeugs (14), mit: einer Aufnahmeeinheit (22) zum Empfangen eines brennbaren Gases; einer Kraft-Wärme-Kopplungseinheit (24) zum Gewinnen von elektrischer Energie und Wärme aus dem brennbaren Gas; einer Wandeleinheit (26) zum Erzeugen mindestens eines Ladeenergieprodukts unter Verwendung der gewonnenen elektrischen Energie und/oder Wärme; und mindestens einer Anschlusseinheit (20) zum Anschließen des Fahrzeugs, um den Energiespeicher (12) des Fahrzeugs mit dem erzeugten Ladeenergieprodukt und/oder mit der gewonnenen elektrischen Energie zu befüllen. Die Erfindung betrifft weiterhin ein System (10) zum Aufladen eines Energiespeichers (12) eines Fahrzeugs (14), mit einer Biogas-Verflüssigungsanlage (16) zum Erzeugen von verflüssigtem Biogas und einer Versorgungsstation (18).

## Beschreibung

Die vorliegende Erfindung betrifft eine Versorgungsstation zum Aufladen eines Energiespeichers eines Fahrzeugs. Die vorliegende Erfindung betrifft weiterhin ein System zum Aufladen eines Energiespeichers eines Fahrzeugs.

Aufgrund des politischen und gesellschaftlichen Willens zur Energiewende werden alternative Antriebskonzepte immer wichtiger. Elektrofahrzeuge, aber auch Fahrzeuge mit Gas- und Wasserstoffantrieben finden eine immer weitere Verbreitung. Aktuelle Prognosen gehen dabei im Wesentlichen übereinstimmend davon aus, dass der Anteil solcher alternativen Antriebskonzepte weiter zunehmen wird. Dabei eignen sich bestimmte Antriebskonzepte für unterschiedliche Anforderungen jeweils besser oder schlechter im Hinblick auf Energie- und Kosteneffizienz. Beispielsweise wird davon ausgegangen, dass Wasserstoff für den Antrieb größerer Fahrzeuge, insbesondere Lastkraftwagen, im Überlandverkehr eine interessante Option darstellt. Flüssigerdgas bzw. verflüssigtes Erdgas (Liquid Natural Gas, LNG) und komprimiertes Erdgas (Compressed Natural Gas, CNG) sind dabei insbesondere auch auf Basis regenerativer Energieerzeugung (Biogas) interessant.

Unter Biogas versteht sich dabei ein brennbares Gas, das durch Vergärung von Biomasse entsteht. Biogas wird in Biogasanlagen hergestellt, wobei hierfür sowohl Abfälle als auch nachwachsende Rohstoffe verwendet werden. In aktuellen Anlagen wird das Biogas nach der Herstellung gereinigt und in das vorhandene Gasnetz eingespeist. Es ist aber ebenfalls möglich, dass durch die Verwendung einer entsprechenden Verflüssigungsanlage eine Verflüssigung erfolgt, nach der das flüssige Biogas dann mittels entsprechender Tankwagen oder Tankschiffe abtransportiert werden kann.

Die Vielzahl an Energieträgern und unterschiedlichen Anforderungen an die Aufladung der entsprechenden Fahrzeug-Energiespeicher stellt dabei eine Herausforderung an Versorgungs- oder Ladestationen dar. Die meisten Versorgungsstationen sind heutzutage als klassische Tankstellen auf die Versorgung von Fahrzeugen mit Erdölprodukten (Benzin, Diesel) ausgelegt. Zusätzliche Energieträger werden an separaten Anschlusseinheiten für Fahrzeuge zur Verfügung gestellt. Hierfür ist jeweils eine separate Infrastruktur vorgesehen, die zumeist nachträglich installiert wird.

In diesem Zusammenhang wird in der US 2014/0000188A1 eine kombinierte Einkaufseinrichtung offenbart, die nicht nur unterschiedliche Waren und Dienstleistungen für Konsumenten offeriert, sondern auch verschiedene Arten von Kraftstoffen zur Verfügung stellt, um den Bedürfnissen unterschiedlicher Fahrzeuge gerecht zu werden. Die unterschiedlichen Arten an Kraftstoffen können dabei Flüssigerdgas, gasförmiges Erdgas, Wasserstoff, Elektrizität, Brennstoffzellen, Bioalkohol, Brennstoffe mit Ethanol, Methanol und Butanol, Biogas, Biodiesel oder Biomasse-Kraftstoffe sowie auch herkömmliche Kraftstoffarten wie Benzin oder Diesel umfassen.

Eine Herausforderung liegt in diesem Zusammenhang im Zeichen der Energiewende darin, bei der Versorgung von Fahrzeugen mit Energie in unterschiedlichen Formen möglichst energiesparend vorzugehen. Ausgehend hiervon soll eine Versorgungsstation bereitgestellt werden, die es ermöglicht, unterschiedliche Energiespeicher von Fahrzeugen zu befüllen bzw. aufzuladen.

Zum Lösen dieser Aufgabe betrifft die vorliegende Erfindung in einem ersten Aspekt eine Versorgungsstation zum Aufladen eines Energiespeichers eines Fahrzeugs, mit:
- einer Aufnahmeeinheit zum Empfangen eines brennbaren Gases;
- einer Kraft-Wärme-Kopplungseinheit zum Gewinnen von elektrischer Energie und Wärme aus dem brennbaren Gas;
- einer Wandeleinheit zum Erzeugen mindestens eines Ladeenergieprodukts unter Verwendung der gewonnenen elektrischen Energie und/oder Wärme; und
- mindestens einer Anschlusseinheit zum Anschließen des Fahrzeugs, um den Energiespeicher des Fahrzeugs mit dem erzeugten Ladeenergieprodukt und/oder mit der gewonnenen elektrischen Energie zu befüllen.

In einem weiteren Aspekt betrifft die Erfindung ein System zum Aufladen eines Energiespeichers eines Fahrzeugs, mit einer Biogasanlage zum Erzeugen von Biogas und einer Versorgungsstation wie zuvor beschrieben.

Die vorgeschlagene Versorgungsstation basiert auf der Verwendung eines brennbaren Gases, durch das eine Kraft-Wärme-Kopplungseinheit in der Versorgungsstation betrieben wird. Die elektrische Energie und/oder Wärme der Kraft-Wärme-Kopplungseinheit wird dazu verwendet, ein Ladeenergieprodukt zu erzeugen. Dieses Ladeenergieprodukt wird über mindestens eine Anschlusseinheit an ein Fahrzeug abgegeben. Der Energiespeicher des Fahrzeugs wird mit dem Ladeenergieprodukt und/oder mit der elektrischen Energie der Kraft-Wärme-Kopplungseinheit befüllt.

Die Verwendung einer Kraft-Wärme-Kopplungseinheit in einer Versorgungsstation bzw. in einer Tankstelle, die mit einem brennbaren Gas betrieben wird, ermöglicht eine energieeffiziente Aufladung von Energiespeichern von Fahrzeugen. Dadurch, dass zumindest die elektrische Energie oder die Wärme und vorzugsweise sowohl die elektrische Energie als auch die Wärme der Kraft-Wärme-Kopplungseinheit zum Erzeugen des Ladeenergieprodukts verwendet wird, kann eine hohe Energieeffizienz erreicht werden. Es wird möglich, dass das empfangene brennbare Gas effizient in ein geeignetes Ladeenergieprodukt umgesetzt wird. Dieses Ladeenergieprodukt kann dann zum Aufladen des Energiespeichers des Fahrzeugs verwendet werden.

Bei bisherigen Lösungen wird üblicherweise eine bestehende Versorgungsstation nachträglich mit weiteren Anschlusseinheiten zum Versorgen eines Fahrzeugs mit unterschiedlichen Energiearten ausgerüstet. Demgegenüber bietet der erfindungsgemäße Ansatz den Vorteil, dass vor Ort elektrische Energie und Wärme gewonnen wird, um mindestens ein Ladeenergieprodukt zu erzeugen. Insoweit ist insbesondere eine Speicherung des Ladeenergieprodukts nicht oder nur in geringem Maßstab notwendig. Zudem wird eine modulare Erweiterbarkeit der Versorgungsstation erreicht. Je nach Bedarf können weitere Ladeenergieprodukte hinzugenommen werden. Es ergibt sich eine energie- und kosteneffiziente Versorgung von Fahrzeugen mit geeigneten Ladeenergieprodukten.

In einer bevorzugten Ausgestaltung ist die Aufnahmeeinheit zum Empfangen von verflüssigtem Erdgas als brennbares Gas, vorzugsweise verflüssigtem Biogas, ausgebildet. Insbesondere kann Flüssigerdgas empfangen werden. Das Flüssigerdgas wird der Aufnahmeeinheit beispielsweise über entsprechende Tankfahrzeuge oder auch über eine entsprechende Leitung zugeführt. Wenn Biogas empfangen wird, kann regenerative Energie als Basis für die Erzeugung des Ladeenergieprodukts verwendet werden. Hierdurch wird eine energieeffiziente und umweltschonende Versorgung von Fahrzeugen ermöglicht.

In einer bevorzugten Ausgestaltung ist die Aufnahmeeinheit zum Empfangen von gasförmigem Erdgas als brennbares Gas ausgebildet, vorzugsweise gasförmigem Biogas. Die Wandeleinheit umfasst eine Gas-Verflüssigungsanlage zum Verflüssigen des empfangenen brennbaren Gases unter Verwendung der gewonnenen elektrischen Energie. Es ist alternativ möglich, dass gasförmiges Erdgas empfangen wird, beispielsweise durch Anschluss an das Erdgasnetz. Biogas kann beispielsweise in bilanzieller Form empfangen werden. Das empfangene gasförmige Erdgas wird dann verflüssigt, wobei die von der Kraft-Wärme-Kopplungseinheit gewonnene elektrische Energie verwendet wird. Das verflüssigte Gas steht für die Befüllung eines entsprechenden Energiespeichers eines Fahrzeugs zur Verfügung. Es kann auf einen großen Speicher in der Versorgungsstation verzichtet werden. Es ergibt sich eine kosten- und energieeffiziente Möglichkeit zur Versorgung eines Fahrzeugs mit verflüssigtem Erdgas.

In einer bevorzugten Ausgestaltung umfasst die Wandeleinheit eine Kompressionseinheit zum Erzeugen von verdichtetem Gas aus dem verflüssigten Erdgas unter Verwendung der gewonnenen elektrischen Energie und der gewonnenen Wärme. Es ist möglich, dass das verflüssigte Gas weiter verdichtet wird, um es in komprimierter Form einem entsprechenden Energiespeicher eines Fahrzeugs zuzuführen. Bei der Verdichtung werden sowohl die gewonnene elektrische Energie als auch die gewonnene Wärme der Kraft-Wärme-Kopplungseinheit verwendet. Dadurch, dass sowohl die elektrische Energie als auch die Wärme verwendet werden, kann eine effiziente Energieumsetzung bzw. Energieverwertung erfolgen. Eine Verschwendung, beispielsweise in Form von Abwärme, wird vermieden.

In einer bevorzugten Ausgestaltung umfasst die Kompressionseinheit eine mit der gewonnenen elektrischen Energie betriebene Pumpe. Zusätzlich oder alternativ umfasst die Wandeleinheit einen mit der gewonnenen Wärme betriebenen Verdampfer. Für die Komprimierung des verflüssigten Erdgases zu dem verdichteten Gas kann insbesondere eine Pumpe verwendet werden, die mit der elektrischen Energie der Kraft-Wärme-Kopplungseinheit betrieben wird. Weiterhin ist es möglich, dass das verdichtete Gas, das vorzugsweise in flüssigem Zustand verdichtet wird, basierend auf der mit der Kraft-Wärme-Kopplungseinheit gewonnenen Wärme in einem Verdampfer verdampft wird. Durch einen entsprechenden Verdampfer wird also aus dem verflüssigten Erdgas wieder gasförmiges Erdgas hergestellt. Üblicherweise werden entsprechende Fahrzeuge mit einem Drucktank mit gasförmigem verdichtetem Erdgas betankt. Durch die Umsetzung kann insoweit ein Anschluss an in entsprechender Weise standardisierte Fahrzeuge erfolgen. Es ergibt sich eine effiziente Ausnutzung der elektrischen Energie und der gewonnenen Wärme der Kraft-Wärme-Kopplungseinheit.

In einer bevorzugten Ausgestaltung umfasst die Versorgungsstation eine Kompressionsgas-Anschlusseinheit zum Befüllen eines Kompressionsgasspeichers eines Fahrzeugs mit dem verdichteten Gas. Zum Anschließen eines entsprechenden Fahrzeugs bzw. eines entsprechenden Energiespeichers eines Fahrzeugs kann eine Kompressionsgas-Anschlusseinheit vorgesehen sein. Eine solche ist dazu ausgebildet, eine stabile und belastbare Verbindung zwischen dem verdichteten Gas in der Versorgungsstation und einem entsprechenden Hochdrucktank des Fahrzeugs herzustellen. Es kann also direkt ein Fahrzeug mit einem Druckspeicher betankt bzw. der Druckspeicher befüllt werden.

In einer bevorzugten Ausgestaltung umfasst die Wandeleinheit eine weitere Kompressionseinheit zum Erzeugen von hochverdichtetem Gas aus dem verdichteten Gas. Die weitere Kompressionseinheit umfasst vorzugsweise eine mit der gewonnenen elektrischen Energie betriebene weitere Pumpe. Die Wandeleinheit umfasst eine Dampfreformierungseinheit zum Erzeugen von Wasserstoff aus dem hochverdichteten Gas unter Verwendung der gewonnenen elektrischen Energie und/oder der gewonnenen elektrischen Leistung. Durch die weitere Verdichtung des verdichteten Gases zu hochverdichtetem Gas kann dieses hochverdichtete Gas in einer Dampfreformierungseinheit bzw. in einem Dampfreformierungsprozess zum Erzeugen von Wasserstoff verwendet werden. Bei diesem Prozess zum Erzeugen von Wasserstoff wird die gewonnene elektrische Energie und/oder die gewonnene Wärme eingesetzt. Es ergibt sich eine nahezu vollständige Ausnutzung der Energie und Wärme der Kraft-Wärme-Kopplungseinheit. Insoweit kann auch in diesem Fall eine energieeffiziente Wandlung durchgeführt werden. Der Dampfreformierungsprozess erzeugt dann Wasserstoff, der für entsprechende wasserstoffbetriebene Fahrzeuge zur Verfügung steht.

In einer bevorzugten Ausgestaltung umfasst die Wandeleinheit eine Wasserstoff-Verflüssigungseinheit zum Verflüssigen des erzeugten Wasserstoffs unter Verwendung der gewonnenen Wärme. Zunächst liegt der Wasserstoff nach dem Dampfreformierungsprozess in gasförmigem Zustand vor. In einer entsprechenden Wasserstoff-Verflüssigungseinheit kann eine Verflüssigung durchgeführt werden. Dieser flüssige Wasserstoff steht dann zum Befüllen entsprechender Energiespeicher von Fahrzeugen zur Verfügung.

In einer bevorzugten Ausgestaltung umfasst die Versorgungsstation eine Wasserstoff-Anschlusseinheit zum Befüllen eines Wasserstoffspeichers eines Fahrzeugs mit dem erzeugten Wasserstoff. Dabei kann der Wasserstoff sowohl in gasförmigem als auch in flüssigem Zustand verwendet werden. Vorzugsweise erfolgt eine Befüllung eines Fahrzeugs mit gasförmigem Wasserstoff. Dadurch, dass direkt eine entsprechende Anschlusseinheit zur Verfügung steht, mit der ein Wasserstoffspeicher eines Fahrzeugs gefüllt werden kann, kann auf einen groß dimensionierten Wasserstoffspeicher verzichtet werden. Es ergibt sich eine Kostenersparnis im Vergleich zu herkömmlichen Wasserstofftankstellen.

In einer bevorzugten Ausgestaltung umfasst die Versorgungsstation eine Flüssigerdgas-Anschlusseinheit zum Befüllen eines Flüssigerdgasspeichers eines Fahrzeugs mit dem verflüssigten Erdgas. Wenn Flüssigerdgas bzw. verflüssigtes Erdgas zur Verfügung steht, kann dieses über eine entsprechende Anschlusseinheit an Fahrzeuge ausgegeben werden. Insoweit können auch Fahrzeuge mit Flüssigerdgasspeicher befüllt werden. Ein Vorhalten größerer Mengen an Flüssigerdgas ist nicht notwendig, da eine Erzeugung des Flüssigerdgases innerhalb der Versorgungsstation stattfinden kann.

In einer bevorzugten Ausgestaltung umfasst die Versorgungsstation eine Strom-Anschlusseinheit zum Befüllen eines Stromspeichers eines Fahrzeugs mit der gewonnenen elektrischen Energie. Die Strom-Anschlusseinheit ist dabei vorzugsweise als Ladesäule oder als Wandladestation ausgebildet. In anderen Worten ist es möglich, direkt die elektrische Energie der Kraft-Wärme-Kopplungseinheit dazu zu verwenden, einen Stromspeicher eines Fahrzeugs zu laden. Die mittels der Kraft-Wärme-Kopplungseinheit gewonnene Energie wird insoweit effizient ausgenutzt.

In einer bevorzugten Ausgestaltung umfasst die Versorgungsstation eine Photovoltaikeinheit zum Gewinnen von elektrischer Energie. Die gewonnene elektrische Energie kann direkt dazu verwendet werden, eine Batterie eines Elektrofahrzeugs zu laden. Ebenfalls ist es aber auch möglich, dass die gewonnene elektrische Energie für andere Zwecke, beispielsweise zum Betreiben einer Tankstellen-Infrastruktur, verwendet wird.

In einer bevorzugten Ausgestaltung umfasst die Versorgungsstation eine Elektrolysiereinheit zum Erzeugen von Wasserstoff aus der gewonnenen elektrischen Energie. Weiterhin umfasst die Versorgungsstation eine Methanisierungseinheit zum Erzeugen von synthetischem Methan aus dem erzeugten Wasserstoff und zum Zuleiten des synthetischen Methans zu der Aufnahmeeinheit als brennbares Gas. Wenn eine größere Menge bzw. ein Überschuss an elektrischer Energie zur Verfügung steht, beispielsweise aufgrund einer intensiven Sonneneinstrahlung auf die Photovoltaikzellen der Photovoltaikeinheit, kann diese elektrische Energie in einer Elektrolysiereinheit zum Erzeugen von Wasserstoff verwendet werden. In einer Elektrolysiereinheit wird in einem entsprechenden Elektrolyseprozess Wasserstoff erzeugt. Zudem kann eine Methanisierungseinheit vorgesehen sein, die basierend auf dem erzeugten Wasserstoff wiederum synthetisches Methan erzeugt, das über die Aufnahmeeinheit als brennbares Gas im weiteren Verlauf zur Verfügung steht. Es ergibt sich insoweit eine effiziente Verwendung überschüssiger elektrischer Energie. Eine Energieverschwendung wird vermieden.

In einer bevorzugten Ausgestaltung umfasst die Versorgungsstation einen Stromspeicher zum Speichern der gewonnenen elektrischen Energie. Dabei ist der Stromspeicher vorzugsweise als Lithium-Ionen-Speicher ausgebildet. Ein Stromspeicher übernimmt insoweit eine Pufferfunktion, um die kontinuierlich erzeugte elektrische Energie der Kraft-Wärme-Kopplungseinheit sowie - gegebenenfalls - der Photovoltaikeinheit zu verwenden. Ein Stromspeicher erlaubt einen höheren Anteil an direkt verwendeter elektrischer Energie. Einer Verschwendung wird vorgebeugt.

In einer bevorzugten Ausgestaltung ist die Kraft-Wärme-Kopplungseinheit als Blockheizkraftwerk mit einer elektrischen Leistung zwischen 50 kW und 500 kW ausgebildet. Es hat sich gezeigt, dass ein Blockheizkraftwerk (BHKW) mit einer entsprechenden elektrischen Leistung ausreichend leistungsfähig für den Betrieb in einer Versorgungsstation ist. Es ergibt sich ein hoher Wirkungsgrad.

Ein Energiespeicher eines Fahrzeugs entspricht hierin einer Vorrichtung zum Speichern einer Energieart. Insbesondere kann ein Energiespeicher einen Tank zum Speichern von flüssigem oder gasförmigem Erdgas oder einen Akku zum Speichern von elektrischer Energie umfassen. Eine Kraft-Wärme-Kopplungseinheit ist hierin insbesondere eine Vorrichtung, die die gleichzeitige Gewinnung von mechanischer Energie und nutzbarer Wärme in einem thermodynamischen Prozess ermöglicht. Die mechanische Energie wird unmittelbar in elektrischen Strom umgewandelt. Die Kraft-Wärme-Kopplungseinheit verwendet dazu das empfangene brennbare Gas. Unter einem Ladeenergieprodukt versteht sich hierin insbesondere ein Stoff, der in einem Fahrzeug zum Betreiben des Fahrzeugs gespeichert werden kann. Insbesondere kann ein Ladeenergieprodukt flüssiges oder gasförmiges Erdgas, Wasserstoff oder elektrische Energie sein. Der Begriff brennbares Gas kann hierin alle Arten von brennbaren Gasen oder auch Gasmischungen umfassen, die gasförmig oder in verflüssigter Form transportiert und verarbeitet werden können. Unter den Begriffen verflüssigtes Erdgas (LNG) bzw. komprimiertes Erdgas (CNG) wird ein brennbares Gas oder eine brennbare Gasmischung verstanden, die Methan umfasst. Das verflüssigte oder komprimierte Erdgas kann dabei sowohl aus fossilen Quellen als auch aus regenerativen Quellen stammen. Unter Biogas versteht sich hierin insoweit insbesondere eine Art von verflüssigtem bzw. komprimiertem Erdgas, die durch Vergärung von Biomasse entsteht.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere kann das System entsprechend den für die Versorgungsstation in den abhängigen Ansprüchen beschriebenen Ausgestaltungen ausgeführt sein.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine schematische Darstellung eines erfindungsgemäßen Systems zum Aufladen eines Energiespeichers eines Fahrzeugs;
- Fig. 2: eine schematische Darstellung einer erfindungsgemäßen Versorgungsstation;
- Fig. 3: eine schematische Darstellung einer erfindungsgemäßen Versorgungsstation in einer weiteren Ausführungsform;
- Fig. 4: eine schematische Darstellung einer erfindungsgemäßen Versorgungsstation mit einer Photovoltaikeinheit; und
- Fig. 5: eine schematische Darstellung einer erfindungsgemäßen Versorgungsstation mit einer Photovoltaikeinheit und einem Energiespeicher.

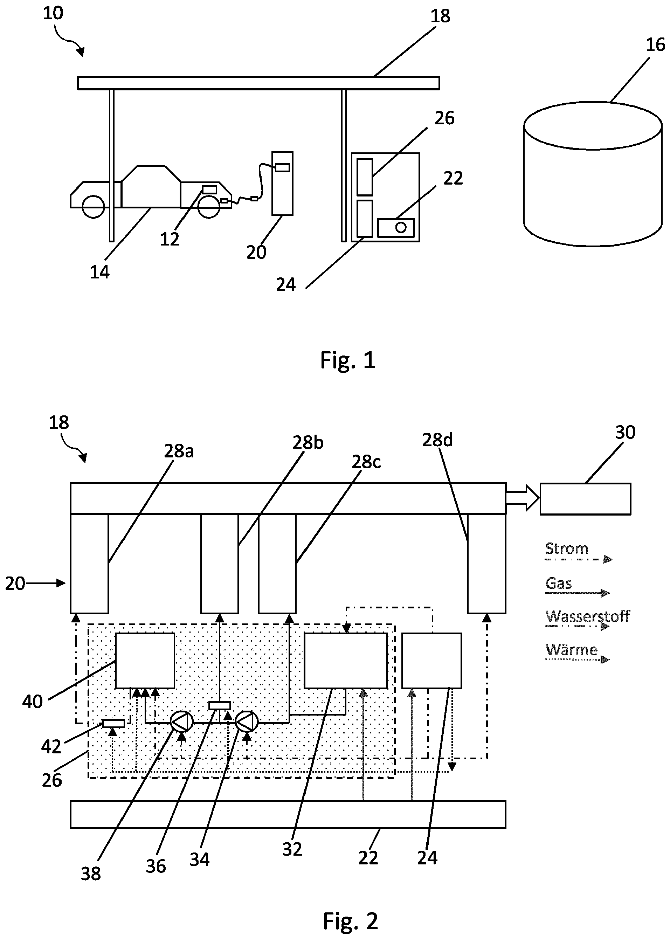

In der Fig. 1 ist schematisch ein System 10 zum Aufladen eines Energiespeichers 12 eines Fahrzeugs 14 dargestellt. Das System 10 umfasst eine Biogas-Verflüssigungsanlage 16, in der Biogas erzeugt wird, insbesondere durch eine Vergärung von Bioabfällen oder nachwachsenden Rohstoffen. Das System umfasst weiterhin eine Versorgungsstation 18, in der der Energiespeicher 12 des Fahrzeugs 14 geladen bzw. befüllt werden kann. Im dargestellten Beispiel ist in der Versorgungsstation 18 eine Anschlusseinheit 20 vorgesehen, die als Strom-Ladesäule ausgebildet ist, um eine Fahrzeugbatterie aufzuladen.

Die Biogas-Verflüssigungsanlage 16 ist insbesondere räumlich entfernt von der Versorgungsstation 18 angeordnet. Das in der Biogasanlage erzeugte Biogas kann insbesondere in verflüssigtem Zustand mittels eines entsprechenden Transportfahrzeugs zu der Versorgungsstation 18 transportiert werden und über eine Aufnahmeeinheit 22 an der Versorgungsstation 18 empfangen werden. In der Versorgungsstation 18 wird basierend auf dem verflüssigten Erdgas als brennbares Gas eine Kraft-Wärme-Kopplungseinheit 24 betrieben. In einer Wandeleinheit 26 wird basierend auf der Wärme und/oder elektrischen Energie der Kraft-Wärme-Kopplungseinheit 24 ein Ladeenergieprodukt erzeugt, mit dem dann das Fahrzeug 14 versorgt werden kann.

Insoweit entspricht das erfindungsgemäße System 10 einem Ansatz zum regenerativen Versorgen von Fahrzeugen mit Energie. Ein wesentlicher Vorteil des vorgeschlagenen Ansatzes ist dabei die modulare Erweiterbarkeit der Versorgungsstation 18. Die Einheiten und Komponenten der Versorgungsstation 18 können je nach Anwendungsort und spezifischen Anordnungen in energetisch sinnvoller Weise kombiniert werden. Basis der Energieversorgung ist dabei immer ein brennbares Gas und insbesondere Biogas, durch das verschiedene andere Ladeenergieprodukte erzeugt werden können. Die verschiedenen Ladeenergieprodukte sind insoweit zumindest größtenteils regenerativ erzeugt. In der Versorgungsstation 18 werden unterschiedliche Ladeenergieprodukte erzeugt, wobei in der Erzeugung die Energieeffizienz beachtet wird. Insbesondere soll für die Erzeugung der Ladeenergieprodukte in der erfindungsgemäßen Versorgungsstation 18 weniger Energie verwendet werden, als wenn diese separat erzeugt würden.

In der Fig. 2 ist schematisch eine Ausführungsform der erfindungsgemäßen Versorgungsstation 18 dargestellt. Die Versorgungsstation 18 umfasst eine Aufnahmeeinheit 22, eine Kraft-Wärme-Kopplungseinheit 24, eine Wandeleinheit 26 sowie mindestens eine Anschlusseinheit 20. Im dargestellten Ausführungsbeispiel umfasst die Versorgungsstation 18 vier Anschlusseinheiten 28a-28d. Weiterhin umfasst die Versorgungsstation 18 im dargestellten Ausführungsbeispiel eine Abrechnungseinheit 30, die dazu dient, zwischen einem Energieanbieter und einem Bezieher der Energie eine Abrechnung zu ermöglichen. Es versteht sich, dass die verschiedenen Einheiten einzeln oder in kombinierter Form ausgeführt sein können. Insbesondere können die Einheiten auch mehrere Untereinheiten umfassen. Die dargestellten Pfeile in der Fig. 2 kennzeichnen die Strom- (-.), Gas- (-), Wasserstoff- (-..) und Wärmeverteilung (...) innerhalb der Versorgungsstation 18.

Die Aufnahmeeinheit 22 dient zum Empfangen des brennbaren Gases. Hierzu kann die Aufnahmeeinheit 22 insbesondere einen Anschlussstutzen zum Einfüllen des brennbaren Gases, beispielsweise durch einen Netzanschluss an ein Erdgasnetz oder auch durch Anbinden eines Flüssigerdgas-Tankwagens, umfassen. Ebenfalls kann die Aufnahmeeinheit 22 einen entsprechenden Tank zum Aufnehmen von verflüssigtem Erdgas oder auch einen Druckspeicher zum Aufnehmen von gasförmigem Erdgas umfassen.

Die Kraft-Wärme-Kopplungseinheit 24 ist dazu ausgebildet, elektrische Energie und Wärme basierend auf dem brennbaren Gas zu gewinnen. Insbesondere kann die Kraft-Wärme-Kopplungseinheit als Blockheizkraftwerk (BHKW) ausgebildet sein. Das BHKW kann vorzugsweise eine elektrische Leistung zwischen 50 kW und 500 kW haben. Die Kraft-Wärme-Kopplungseinheit 24 verwendet insbesondere einen thermodynamischen Prozess, um mechanische Energie und nutzbare Wärme zu erzeugen. Die mechanische Energie wird unmittelbar in elektrischen Strom bzw. in elektrische Energie umgesetzt. Die Kraft-Wärme-Kopplungseinheit 24 kann dabei insbesondere zusammen mit der Wandeleinheit 26 und der Aufnahmeeinheit 22 innerhalb eines Versorgungsgebäudes der Versorgungsstation 18 angeordnet sein.

Die Wandeleinheit 26 dient zum Erzeugen mindestens eines Ladeenergieprodukts unter Verwendung der gewonnenen elektrischen Energie und/oder Wärme. Die Wandeleinheit 26 ist dabei insoweit modular aufgebaut, als im einfachsten Fall lediglich die elektrische Energie oder Wärme verwendet wird. Im dargestellten Ausführungsbeispiel in der Fig. 2 umfasst die Wandeleinheit 26 mehrere Komponenten. Es versteht sich, dass die Komponenten auch in anderer Weise kombiniert sein können.

Zunächst ist es vorgesehen, dass in einer Gasverflüssigungseinheit 32 das empfangene brennbare Gas unter Verwendung der gewonnenen elektrischen Energie der Kraft-Wärme-Kopplungseinheit 24 verflüssigt wird. Dies ist insbesondere der Fall, wenn über die Aufnahmeeinheit 22 gasförmiges Erdgas empfangen wird. Ansonsten ist eine Verflüssigung nicht notwendig. Es gibt aktuell Forschungsanstrengungen, eine modulare Verflüssigungsanlage in kleineren Leistungsgrößen zum Verflüssigen von Biogas bereitzustellen. Entweder nach der Verflüssigung in der Gas-Verflüssigungseinheit 32 oder direkt nach dem Empfang verflüssigten Erdgases über die Aufnahmeeinheit 22 kann dieses verflüssigte Gas über eine Flüssigerdgas-Anschlusseinheit 28c einem Fahrzeug mit einem entsprechenden Flüssigerdgasspeicher zur Verfügung gestellt werden. Die Flüssigerdgas-Anschlusseinheit 28c entspricht insoweit insbesondere einer LNG-Zapfsäule.

Weiterhin umfasst die Wandeleinheit 26 im dargestellten Ausführungsbeispiel eine Kompressionseinheit 34, die dazu ausgebildet ist, aus verflüssigtem Erdgas verdichtetes Gas zu erzeugen. Im dargestellten Ausführungsbeispiel ist die Kompressionseinheit 34 an die Gas-Verflüssigungseinheit 32 angekoppelt. Es versteht sich aber auch, dass es möglich ist, die Kompressionseinheit 34 direkt an die Aufnahmeeinheit 22 anzubinden, sofern diese zum Empfangen von verflüssigtem Erdgas ausgebildet ist. Die Kompressionseinheit 34 wird mit der elektrischen Energie der Kraft-Wärme-Kopplungseinheit 24 betrieben und umfasst insbesondere eine elektrische Pumpe. Über die elektrische Pumpe kann beispielsweise ein Druck von 300 bar erzeugt werden. Zum Erzeugen eines derartigen Drucks ist eine vergleichsweise hohe elektrische Leistung erforderlich. Wie dargestellt wird der Druck in der erfindungsgemäßen Versorgungsstation 18 im flüssigen Zustand des brennbaren Gases erzeugt. Dafür ist im Vergleich zu einer Druckerzeugung in gasförmigem Zustand deutlich weniger Energie erforderlich.

Zusätzlich umfasst die Wandeleinheit 26 im dargestellten Ausführungsbeispiel einen Verdampfer 36, der insbesondere mit der gewonnenen Wärme der Kraft-Wärme-Kopplungseinheit 24 betrieben werden kann. Im Verdampfer 36 kann basierend auf der Abwärme der Kraft-Wärme-Kopplungseinheit 24 das verflüssigte Erdgas verdampft werden, um dann in einem Druckspeicher für eine CNG-Tankstelle bzw. CNG-Zapfsäule gespeichert zu werden. Wie dargestellt ist insoweit eine entsprechende Kompressionsgas-Anschlusseinheit 28b vorgesehen, über die ein Kompressionsgasspeicher eines Fahrzeugs mit dem verdichteten Gas befüllt werden kann. Die Kompressionsgas-Anschlusseinheit 28b kann insbesondere eine CNG-Zapfsäule ggf. zusammen mit einem entsprechenden Tank umfassen.

Weiterhin umfasst die Wandeleinheit 26 eine weitere Kompressionseinheit 38, die ebenfalls mit der elektrischen Energie der Kraft-Wärme-Kopplungseinheit 24 betrieben wird. In der weiteren Kompressionseinheit 38 wird aus dem verdichteten Gas hochverdichtetes Gas erzeugt. Der Druck wird weiter erhöht. Insbesondere kann die weitere Kompressionseinheit 38 hierzu eine elektrische Pumpe umfassen. In der weiteren Kompressionseinheit 38 wird das verdichtete Gas in flüssigem Zustand weiter komprimiert, um dabei die vergleichsweise höheren Verdichtungsenergien im gasförmigen Zustand zu umgehen. Insbesondere kann eine Verdichtung bis zu einem Druck von 800 bar stattfinden.

Ausgehend von der weiteren Kompressionseinheit 38 wird dann in einer Dampfreformierungseinheit40 (insb. umfassend einen Steamreformer) aus dem hochverdichteten Gas unter Verwendung der gewonnenen elektrischen Energie und/oder der gewonnenen Wärme der Kraft-Wärme-Kopplungseinheit 24 Wasserstoff erzeugt. Insbesondere wird bei einem hohen Druck von 800 bar in einem Steamreformer das brennbare Gas zu Wasserstoff umgewandelt. Die dazu benötigte Verdampfungswärme entsteht zum Teil beim Reformieren, kann aber auch der Kraft-Wärme-Kopplungseinheit 24 entnommen werden. Insoweit stellt dieser Ansatz eine wirtschaftliche Methode zum Erzeugen von grünem Wasserstoff dar. Der Wasserstoff wird über eine Wasserstoff-Anschlusseinheit 28a zum Befüllen eines Wasserstoffspeichers eines Fahrzeugs zur Verfügung gestellt. Die Wasserstoff-Anschlusseinheit 28a kann insbesondere als Wasserstoff-Zapfsäule ausgebildet sein.

Optional ist es weiterhin möglich, dass die Wandeleinheit 26 zudem eine Wasserstoff-Verflüssigungseinheit 42 zum Verflüssigen des erzeugten Wasserstoffs umfasst. Hierzu kann ebenfalls die gewonnene Wärme der Kraft-Wärme-Kopplungseinheit 24 verwendet werden.

Im dargestellten Ausführungsbeispiel ist zudem eine Strom-Anschlusseinheit 28d vorgesehen, die zum Befüllen eines Stromspeichers eines Fahrzeugs mit der gewonnenen elektrischen Energie der Kraft-Wärme-Kopplungseinheit 24 dient. Diese Strom-Anschlusseinheit 28d kann insbesondere als Ladesäule oder auch als Wandladestation ausgebildet sein.

In der Abrechnungseinheit 30 wird insbesondere eine abgegebene Menge des Ladeenergieprodukts gemessen, um festzulegen, welchen Preis der Konsument für das Befüllen des Energiespeichers seines Fahrzeugs zu bezahlen hat.

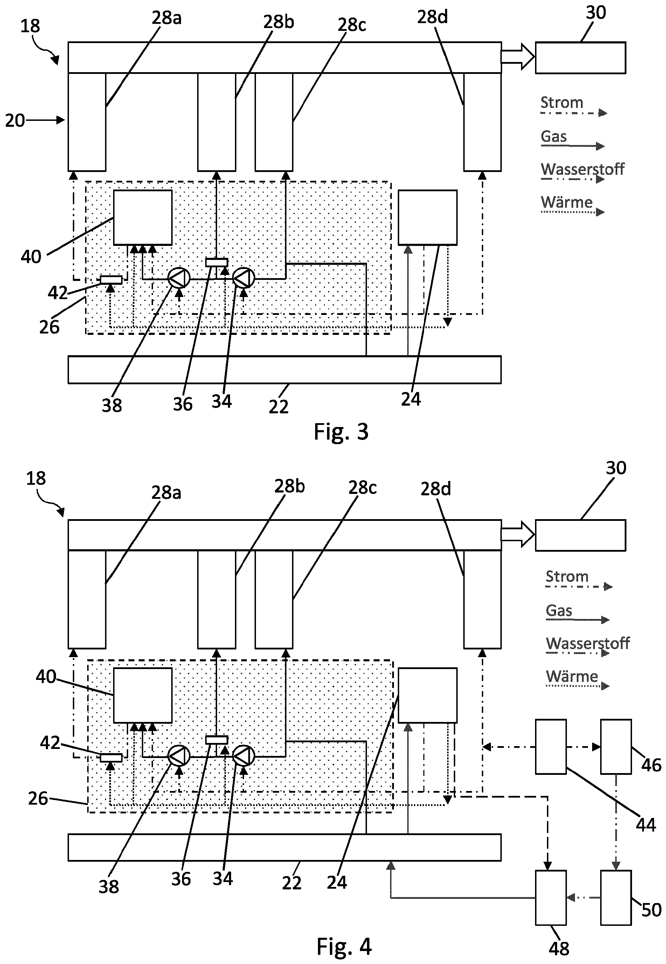

In den Fig. 3 bis 5 sind jeweils weitere Ausführungsbeispiele der Versorgungsstation 18 gezeigt. Identische Bezugszeichen bezeichnen dabei identische Gegenstände und werden zur Vereinfachung nicht erneut beschrieben. Insoweit wird auf die obige Beschreibung bezüglich Fig. 2 Bezug genommen.

In den Fig. 3 bis 5 sind Ausführungsformen der Versorgungsstation 18 dargestellt, bei denen über die Aufnahmeeinheit 22 direkt verflüssigtes Erdgas als brennbares Gas empfangen wird. Daher ist im Gegensatz zu der in Fig. 2 dargestellten Variante jeweils keine Gas-Verflüssigungseinheit vorgesehen. Das empfangene verflüssigte Erdgas wird bei den in Fig. 3 bis 5 gezeigten Ausführungsformen direkt der Flüssigerdgas-Anschlusseinheit 28c zur Verfügung gestellt und auch direkt in der Kompressionseinheit 34 weiterverarbeitet.

In der Fig. 4 ist eine Ausführungsform der Versorgungsstation 18 dargestellt, bei der zusätzlich eine Photovoltaikeinheit 44 vorgesehen ist, die beispielsweise auf einem Dach der Versorgungsstation 18 angeordnete Photovoltaikzellen umfassen kann. Die Photovoltaikeinheit 44 dient zum Gewinnen von elektrischer Energie aus Sonnenstrahlung. Wenn eine entsprechend groß dimensionierte Photovoltaikeinheit 44 verwendet wird, kann in einer Elektrolysiereinheit 46 Wasserstoff erzeugt werden. Es wird ein Elektrolyseprozess durchgeführt. Dieser erzeugte Wasserstoff kann in einer Methanisierungseinheit 48 zum Erzeugen von synthetischem Methan oder direkt (beispielsweise durch Einspeisung/Zumischung ins Erdgasnetz) verwendet werden. Der Wasserstoff wird methanisiert. Das erzeugte synthetische Methan kann wiederum der Aufnahmeeinheit 22 als brennbares Gas zugeleitet werden. Bei der Methanisierung kann insbesondere CO₂ aus der Kraft-Wärme-Kopplungseinheit 24 eingesetzt werden, wie durch den gestrichelten Pfeil angedeutet.

Im dargestellten Ausführungsbeispiel in der Fig. 4 ist weiterhin ein Wasserstoffspeicher 50 vorgesehen, in dem der erzeugte Wasserstoff vorübergehend gespeichert werden kann. Es versteht sich, dass es auch möglich ist, dass der in der Elektrolysiereinheit 46 erzeugte Wasserstoff bzw. der in dem Wasserstoffspeicher 50 gespeicherte Wasserstoff zu der Wasserstoff-Anschlusseinheit 28a geleitet wird, um zum Befüllen eines Wasserstoffspeichers eines Fahrzeugs zur Verfügung zu stehen.

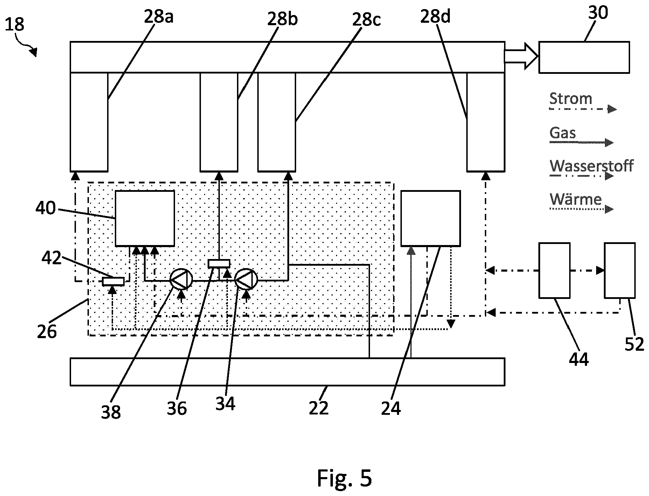

In der Fig. 5 ist eine Ausführungsform gezeigt, bei der die Photovoltaikeinheit 44 an einen Stromspeicher 52 angeschlossen ist. Der Stromspeicher 52 speist die elektrische Energie in das entsprechende Stromnetz der Versorgungsstation 18 ein. Insbesondere kann der Stromspeicher 52 als Lithium-Ionen-Speicher ausgebildet sein.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Versorgungsstation (18) zum Aufladen eines Energiespeichers (12) eines Fahrzeugs (14), mit:
einer Aufnahmeeinheit (22) zum Empfangen eines brennbaren Gases;
einer Kraft-Wärme-Kopplungseinheit (24) zum Gewinnen von elektrischer Energie und Wärme aus dem brennbaren Gas;
einer Wandeleinheit (26) zum Erzeugen mindestens eines Ladeenergieprodukts unter Verwendung der gewonnenen elektrischen Energie und/oder Wärme; und
mindestens einer Anschlusseinheit (20) zum Anschließen des Fahrzeugs, um den Energiespeicher (12) des Fahrzeugs mit dem erzeugten Ladeenergieprodukt und/oder mit der gewonnenen elektrischen Energie zu befüllen.

2. Versorgungsstation (18) nach Anspruch 1, wobei die Aufnahmeeinheit (22) zum Empfangen von verflüssigtem Erdgas als brennbares Gas, vorzugsweise verflüssigtem Biogas, ausgebildet ist.

3. Versorgungsstation (18) nach Anspruch 1, wobei
die Aufnahmeeinheit (22) zum Empfangen von gasförmigem Erdgas als brennbares Gas ausgebildet ist, vorzugsweise gasförmigem Biogas; und
die Wandeleinheit (26) eine Gas-Verflüssigungseinheit (32) zum Verflüssigen des empfangenen brennbaren Gases unter Verwendung der gewonnenen elektrischen Energie umfasst.

4. Versorgungsstation (18) nach einem der Ansprüche 2 oder 3, wobei
die Wandeleinheit (26) eine Kompressionseinheit (34) zum Erzeugen von verdichtetem Gas aus dem verflüssigten Erdgas unter Verwendung der gewonnenen elektrischen Energie und der gewonnenen Wärme umfasst;
die Kompressionseinheit (34) vorzugsweise eine mit der gewonnenen elektrischen Energie betriebene Pumpe umfasst; und
die Wandeleinheit (26) vorzugsweise einen mit der gewonnenen Wärme betriebenen Verdampfer (36) umfasst.

5. Versorgungsstation (18) nach Anspruch 4, mit einer Kompressionsgas-Anschlusseinheit (28b) zum Befüllen eines Kompressionsgasspeichers eines Fahrzeugs (14) mit dem verdichteten Gas.

6. Versorgungsstation (18) nach einem der Ansprüche 4 bis 5, wobei
die Wandeleinheit (26) eine weitere Kompressionseinheit (38) zum Erzeugen von hochverdichtetem Gas aus dem verdichteten Gas umfasst und die weitere Kompressionseinheit vorzugsweise eine mit der gewonnenen elektrischen Energie betriebene weitere Pumpe umfasst; und
die Wandeleinheit (26) eine Dampfreformierungseinheit (40) zum Erzeugen von Wasserstoff aus dem hochverdichteten Gas unter Verwendung der gewonnenen elektrischen Energie und/oder der gewonnenen Wärme umfasst.

7. Versorgungsstation (18) nach Anspruch 6, wobei die Wandeleinheit (26) eine Wasserstoff-Verflüssigungseinheit (42) zum Verflüssigen des erzeugten Wasserstoffs unter Verwendung der gewonnenen Wärme umfasst.

8. Versorgungsstation (18) nach einem der Ansprüche 6 und 7, mit einer Wasserstoff-Anschlusseinheit (28a) zum Befüllen eines Wasserstoffspeichers eines Fahrzeugs (14) mit dem erzeugten Wasserstoff.

9. Versorgungsstation (18) nach einem der Ansprüche 2 bis 8, mit einer Flüssigerdgas-Anschlusseinheit (28c) zum Befüllen eines Flüssigerdgasspeichers eines Fahrzeugs (14) mit dem verflüssigten Erdgas.

10. Versorgungsstation (18) nach einem der vorstehenden Ansprüche, mit:
einer Strom-Anschlusseinheit (28d) zum Befüllen eines Stromspeichers eines Fahrzeugs (14) mit der gewonnenen elektrischen Energie, wobei
die Strom-Anschlusseinheit vorzugsweise als Ladesäule oder als Wandladestation ausgebildet ist.

11. Versorgungsstation (18) nach einem der vorstehenden Ansprüche, mit einer Photovoltaikeinheit (44) zum Gewinnen von elektrischer Energie.

12. Versorgungsstation (18) nach Anspruch 11, mit:
einer Elektrolysierreinheit (46) zum Erzeugen von Wasserstoff aus der gewonnenen elektrischen Energie; und
einer Methanisierungseinheit (48) zum Erzeugen von synthetischem Methan aus dem erzeugten Wasserstoff und zum Zuleiten des synthetischen Methans zu der Aufnahmeeinheit (22) als brennbares Gas.

13. Versorgungsstation (18) nach einem der vorstehenden Ansprüche, mit:
einem Stromspeicher (52) zum Speichern der gewonnenen elektrischen Energie; wobei
der Stromspeicher vorzugsweise als Lithium-Ionen-Speicher ausgebildet ist.

14. Versorgungsstation (18) nach einem der vorstehenden Ansprüche, wobei die Kraft-Wärme-Kopplungseinheit (24) als Blockheizkraftwerk mit einer elektrischen Leistung zwischen 50 kW und 500 kW ausgebildet ist.

15. System (10) zum Aufladen eines Energiespeichers (12) eines Fahrzeugs (14), mit einer Biogas-Verflüssigungsanlage (16) zum Erzeugen von verflüssigtem Biogas und einer Versorgungsstation (18) nach einem der vorstehenden Ansprüche.
